(19) Europäisches Patentamt
European Patent Office
Office européen des brevets

(11) Publication number: **0 227 163 B1**

(12) **EUROPEAN PATENT SPECIFICATION**

(45) Date of publication of patent specification: **20.05.92** (51) Int. Cl.[5]: **C08K 5/01**, C08L 21/00

(21) Application number: **86202164.9**

(22) Date of filing: **03.12.86**

(54) **Crosslinkable elastomeric compositions.**

(30) Priority: **23.12.85 US 812422**

(43) Date of publication of application:
**01.07.87 Bulletin 87/27**

(45) Publication of the grant of the patent:
**20.05.92 Bulletin 92/21**

(84) Designated Contracting States:
**AT BE CH DE ES FR GB IT LI NL SE**

(56) References cited:
**GB-A- 917 150**
**US-A- 4 540 763**

(73) Proprietor: **SHELL INTERNATIONALE RESEARCH MAATSCHAPPIJ B.V.**
**Carel van Bylandtlaan 30**
**NL-2596 HR Den Haag(NL)**

(72) Inventor: **Wong, Pui Kwan**
**21119 Park York Drive**
**Katy Texas 77450(US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 227 163 B1

## Description

The invention relates to a crosslinkable polymeric composition. The invention also relates to cured compositions obtained by crosslinking said polymeric compositions, and to a process for the preparation of said crosslinkable polymeric compositions.

As described in the article "Elastomers, Synthetic", Kirk-Othmer Encyclopedia of Chemical Technology, Vol. 7, Pages 677-716 (Interscience Publisher 1965), synthetic elastomers are a group of synthetic high polymeric materials with properties that, in the past, might have been described as rubbery. The ASTM definition for rubber (1964 Book of ASTM Standards, ASTM D1566-62T) appears to also cover elastomers. This definition, which is based on physical characteristics and not on chemical structure, defines a rubber as a material that is capable of recovery from large deformations quickly and forcibly and can be, or already is, modified to a state in which it is essentially insoluble (but can swell) in boiling solvents such as benzene, methyl ethyl ketone, and the azeotropic mixture of ethanol and toluene. A rubber in its modified state, free of diluents, retracts within one min to less than 1.5 times its original length after being stretched at room temperature (20-27 °C) to twice its length and held for one min before release.

With a few exceptions, elastomers are not typically employed in their raw or dry state. For the great majority of uses, the elastomer must be modified, usually by the addition of crosslinking or curing agents, followed by heating to effect crosslinking or curing.

One common elastomer of general utility is ethylene-propylene-diene terpolymer (EPDM). EPDM polymers are desirable elastomers since they are prepared from low-cost monomers and have good mechanical and elastic properties as well as outstanding resistance to ozone, heat and chemical attack.

EPDM polymers may be cured with sulphur but usually require ultra-accelerators in the recipe because of the low-polymer unsaturation. EPDM can be vulcanized with systems based on sulphur, peroxides, quinoids, or polyhalomethyl resins. Some of the best current systems contain sulphur (1.5 parts per hundred, phr), zinc oxide (5 phr), stearic acid, a primary accelerator (thiuram mono-, di- or tetrasulphides or metal salts of a dithiocarbamic acid (1.5 phr)), and a thiazole (0.5 phr) as a secondary accelerator. High oil and black levels can be accepted. With recipes such as these, satisfactory cures for some applications may be obtained in the usual times and temperatures (e.g., 30 min at 160 °C).

Peroxide curing of EPDM elastomers is the most common system. Peroxide curing involves coupling of allylic radicals derived from the cure site monomer and peroxide generated radicals to give vulcanizates containing allylic carbon-carbon bonds. This curing system is not desirable for certain applications. For example, when such EPDM elastomers are used as seals in high temperature applications (above about 300 °C), the peroxide-cured EPDM elastomers may fail.

A crosslinkable polymeric composition has now been found that can be readily crosslinked or cured at a temperature above 200 °C and that results in cured or vulcanized products (e.g. seals) that have an improved balance of properties, for example improved thermal stability, said composition having as essential components an elastomer and a particular benzocyclobutene derivative.

The present invention provides a crosslinkable polymeric composition, which comprises an elastomeric polymer having olefinic unsaturation and, in an amount of more than 1 part by weight per 100 parts by weight of said elastomer, a benzocyclobutene derivative of the general formula I

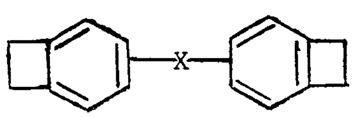

(I)

where X is selected from the group consisting of
-CH = CH-

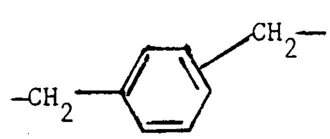

and $-(R)-$
where R represents an alkylene group having in the range of from 1 to 10 carbon atoms, the composition being cured by treating at a temperature above 200 °C.

As shown in the examples hereinafter, the present invention eliminates the use of sulphur and peroxide curing agents which introduce thermally weak and hydrolytically unstable linkages. In addition, the invention leads to a reduction or elimination of weak allylic structures in the cured polymer and consequently may provide enhanced thermal stability. See H.J. Harwood, J TEVA, II, 289 (1983).

One of the essential components of the present invention is an elastomeric polymer having olefinic unsaturation. Preferred such elastomers are:-
ethylene/$C_3$ to $C_8$ alpha-monoolefin/diene terpolymers (EPDM)
butyl rubber
polyisobutylene
polybutadiene
polyisoprene
styrene-butadiene rubber
nitrile rubber
neoprene rubber
styrene-butadiene block copolymers.
Of the above elastomers, EPDM is the preferred elastomer.

EPDM terpolymers useful for this invention comprise ethylene, a $C_3$ to $C_8$ straight or branched chain alpha-olefin and a diene. Said elastomeric polymer is most preferably an ethylene/propylene/diene terpolymer.

Representative non-limiting examples of non-conjugated dienes that may be used as the third monomer in the terpolymer include:-

(a) Straight chain acyclic dienes such as 1,4-hexadiene, 1,5-heptadiene and 1,6-octadiene;

(b) Branched chain acyclic dienes such as 5-methyl-1,4-hexadiene, 3,7-dimethyl-1,6-octadiene and 3,7-dimethyl-1,7-octadiene;

(c) Single ring alicyclic dienes such as 1,4-cyclohexadiene, 1,5-cyclooctadiene, 1,5-cyclododecadiene, 4-vinylcyclohexene, 1-allyl-4-isopropylidene-cyclohexane, 3-allyl-cyclopentene, 4-allyl-cyclohexene and 1-isopropenyl-4-(4-butenyl)cyclohexane;

(d) Multi single ring alicyclic dienes such as 4,4'-dicyclopentenyl dienes and 4,4'-dicyclohexenyl dienes;

(e) Multi-ring alicyclic fused and bridged ring dienes such as tetrahydroindene, methyl-tetrahydroindene, dicyclopentadiene, bicyclo(2.2.1)hepta-2,5-diene, alkenyl-norbornenes, alkylidene-norbornenes, cycloalkenyl-norbornenes and cycloalkylidene-norbornenes, such as 5-methylene-6-methyl-2-norbornene, 5-methylene-6,6-dimethyl-2-norbornene, 5-propenyl-2-norbornene, 5-(3-cyclopentenyl)-2-norbornene and 5-cyclohexylidene-2-norbornene.

In general, useful terpolymers contain non-conjugated dienes having 5 to 14 carbon atoms per molecule and exhibit weight average molecular weights of from 70,000 to 1,000,000 e.g., 70,000 to 150,000. Preferred dienes include ethylidene norbornene, dicyclopentadiene and 1,4 hexadiene. Very good results have been obtained with 1,4-hexadiene. Structurally, the terpolymers suitable for the present invention may be illustrated for various non-conjugated diene monomers as random terpolymers in which the following

moieties are linked in the polymer chain in a random sequence and in a varying number:-

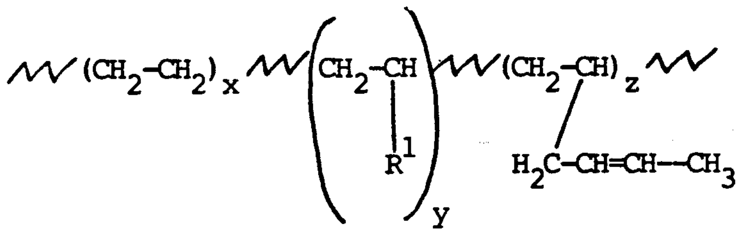

(1)

Ethylene units | Higher α-olefin units | 1,4-hexadiene units

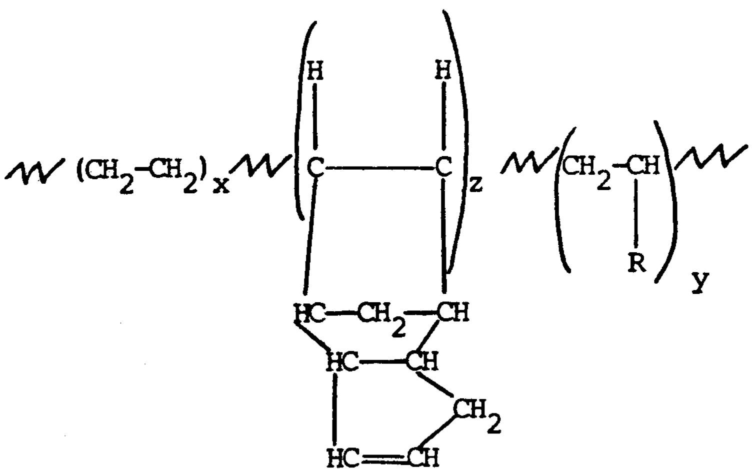

(2)

Ethylene units | Dicyclopentadiene units | Higher α-olefin units

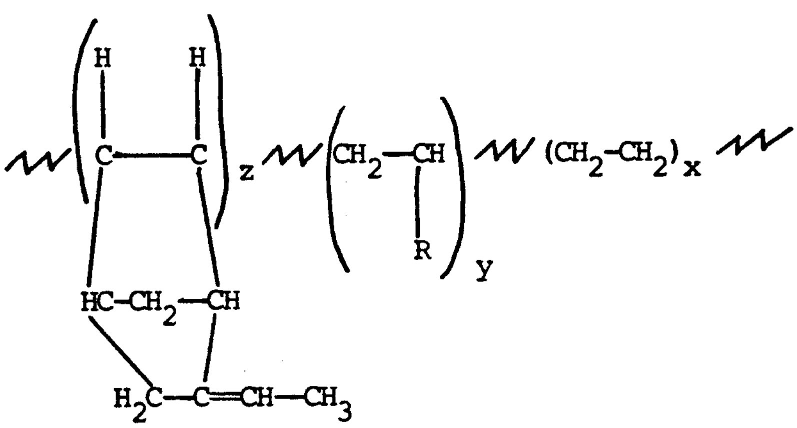

(3)

5-ethylene-2-norbornene | Higher α-olefin units | Ethylene units

in which x, y and z are integers. While these terpolymers are essentially amorphous in character by superficial inspection, they may contain up to about 25 per cent by weight of crystalline segments as determined by X-ray or differential scanning calorimetry. Details of these methods for measurement of crystallinity are found in J. Polymer Science, A-2, 9, 127 (1971) by G. Verstrate and Z.W. Wilchinsky. Terpolymers, useful in the present invention contain at least 30 mol per cent, preferably not more than 85 mol per cent of ethylene; between 15 and 70 mol per cent of a $C_3$ to $C_8$ alphaolefin or mixture thereof, preferably propylene; and between 1 and 20 mol per cent, preferably 1 to 15 mol per cent, of a non-conjugated diene or mixture thereof. Especially preferred are polymers of 40 to 70 mol per cent ethylene, 20 to 58 mol per cent $C_3$ to $C_8$ monoolefin and 2 to 10 mol per cent diene. On a weight basis, usually the diene will be at least 2 or 3 wt. per cent of the total terpolymer.

Other elastomers of this group are isobutylene polymers including solid polyisobutylene and butyl rubber. Butyl rubber is a high molecular weight copolymer of isobutylene with less than 20 per cent, preferably less than 5 per cent of one or more $C_4$-$C_{14}$ diolefins such as isoprene, divinylbenzene and 1,4-pentadiene. See, generally U.S. patent specification No. 3,137,643. Another elastomer is high molecular weight synthetic polybutadiene such as that described in U.S. patent specification No. 3,317,918. Another synthetic elastomeric polymer is neoprene. These neoprene rubbers are typically produced from the polymerization of chloroprene (2-chloro-1,3-butadiene) and those copolymers produced by the polymerization of chloroprene and of styrene, isoprene, and acrylonitrile wherein the major component of the said produced copolymer is chloroprene. A chloroprene polymer can conventionally be produced by emulsifying the chloroprene in water by means of a sodium rosinate soap and polymerizing the chloroprene at 40 °C, with the aid of potassium persulphate as a catalyst and in the presence of elemental sulphur as a modifier. Other similar polymers may be employed as well. See generally the Kirk-Othmer reference cited hereinbefore and "Styrene-Butadiene Solution Copolymers", Kirk-Other Encyclopedia of Chemical Technology, Supplement Volume, pages 910-932 (Interscience Publishing 1971).

The second essential component in the present invention is the benzocyclobutene derivative of the general formula I described hereinbefore.

Preferred benzocyclobutenes ("BCB") of the general formula I are:-
4,4'-ethylenedibenzocyclobutene, 4,4'-(p-xylylene)dibenzocyclobutene,
4,4'-(o-xylylene)dibenzocyclobutene,
4,4'-(m-xylylene)dibenzocyclobutene, 3,3'-(p-xylylene)dibenzocyclobutene,3,3'-(o-xylylene)-dibenzocyclobutene, 3,3'-(m-xylylene)dibenzocyclobutene,4,3'-(p-xylylene)dibenzocyclobutene, 4,3'-(o-xylylene)dibenzocyclobutene,4,3'-(m-xylylene)dibenzocyclobutene, 4,4'-methylenedibenzocyclobutene, 3,3'-methylenedibenzocyclobutene and 4,3'-methylenedibenzocyclobutene. The xylylene and methylene derivatives are more preferred because they do not contain weaker benzylic bonds. Most preferred is 4,4'-ethylenedibenzocyclobutene.

The invention further provides a process for the preparation of a crosslinkable polymeric composition which process comprises combining an elastomeric polymer having olefinic unsaturation and a benzocyclobutene derivative of the general formula I described hereinbefore.

The elastomer and the BCB are preferably mixed by combining the various ingredients in any suitable manner including solution blending, melt blending and dry blending.

An effective amount of BCB is employed. By the term "effective amount" is meant the resulting blends of BCB and rubbers can be cured by treating at temperatures higher than 200 °C to give insoluble elastomers with acceptable mechanical properties. Preferably the amount of BCB employed is between 1 and 30 per cent by weight based on the amount of elastomer employed, more preferably between 5 and 20 per cent by weight.

The polymer blends of the instant invention may be compounded further with other polymers, oils, fillers, reinforcements, antioxidants, stabilizers, fire retardants, antiblocking agents and other rubber and plastic compounding ingredients without departing from the scope of this invention.

The compositions according to the present invention may be formed into a variety of applications including, for example, elastomeric seals, automotive components and belts.

A key aspect of the present invention is that curing of the compositions occurs when the compositions or parts are heated to a temperature above about 200 °C. As shown in the following scheme, the presently claimed crosslinking technique is believed to proceed by the thermal ring opening of benzocyclobutenes to o-xylylenes which then add to the unsaturated elastomer via Diels-Alder reaction. Since the Diels-Alder

cycloaddition would reduce or eliminate thermally weak allylic carbon-carbon bonds, the novel curing chemistry will lead to elastomers with enhanced thermal stability and higher service temperature.

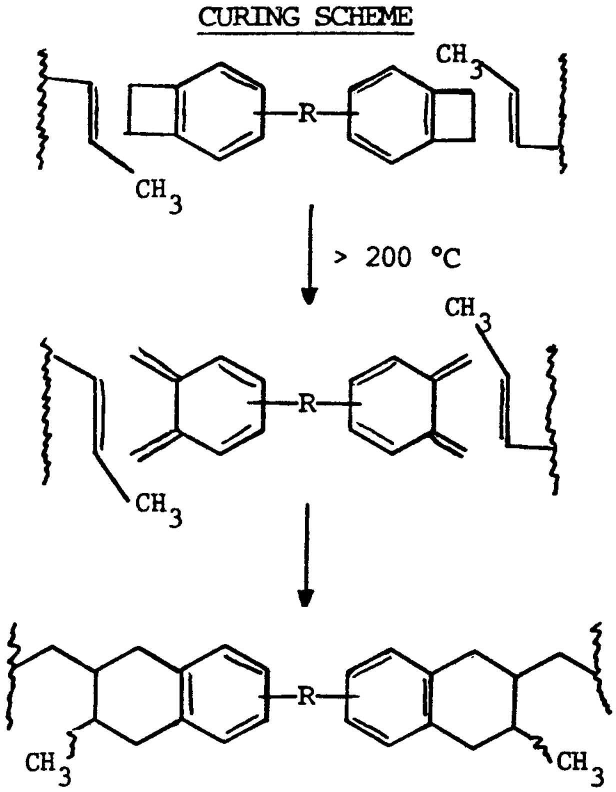


Crosslinking or curing or vulcanization (all terms meaning one and the same) is accomplished by heating the blended compositions to temperatures above 200 °C, preferably in the range of from 200 °C to 300 °C for at least 5 min, more preferably between 200 °C and 250 °C, for sufficient time to result in crosslinking. The time required depends in part upon the temperature employed, the amount of benzocyclobutene derivative employed, and the type of elastomeric component used. Typical curing times are 5 to 120 min at about 250 °C temperature.

The following Examples further illustrate the invention.

Example 1

A key aspect of the present invention deals with the ring-opening of the benzocyclobutene monomers to reactive o-quinodimethanes. In this embodiment, half-life values for the parent benzocyclobutene are calculated and summarized in the following Table 1, based on activation parameters reported in W.R. Roth et al Chem. Ber. 111 (1978) 3892-3903. The results suggest that reactive oligomers and polymers

containing benzocyclobutenes which are not substituted at the cyclobutene ring would have long shelf-life and good reactivity at 200-250 °C.

TABLE 1

Benzocyclobutene --k--> o-quinodimethane

| T (°C) | k ($sec^{-1}$) | $t_{1/2}$ (hr.) |
|---|---|---|
| 25 | $2.5 \times 10^{-15}$ | $7.6 \times 10^{10}$ |
| 100 | $1.7 \times 10^{-9}$ | $1.1 \times 10^{5}$ |
| 150 | $9.6 \times 10^{-7}$ | $2 \times 10^{2}$ |
| 200 | $1.4 \times 10^{-4}$ | 1.4 |
| 250 | $7.8 \times 10^{-3}$ | $2.5 \times 10^{-2}$ |

Example 2

4,4'-ethylenedibenzocyclobutene (EDBC) was prepared according to the procedure described by G.D. Ewing and V. Boekelheide in Chem. Commun. 207 (1977). The $FeCl_3$-catalyzed coupling of 4-chloromethylbenzocyclobutene and its Grignard derivative gave a 65:35 mixture of EDBC and unreacted 4-chloromethylbenzocyclobutene. The contaminated EDBC was used to demonstrate the novel curing chemistry.

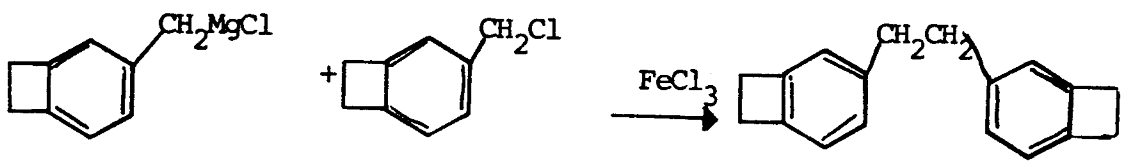


EDBC

Blends of Nordel 1040 (a DuPont EPDM elastomer containing 0.34 meq/g of 1,4-hexadiene cure sites based on ozonolysis) and EDBC were prepared from hexane solutions. Curing was effected by compression moulding at 200 °C for 24 h or 250 °C for 1 h. The heating times were significantly longer than the seven half-lives needed for 99% conversion of benzocyclobutenes to reactive o-xylylenes. The half-life values of benzocyclobutene have been reported to be 1.4 h at 200 °C and 1.5 min at 250 °C. Blends containing 20 parts per hundred (phr) and 30 phr EDBC per 100 phr Nordel 1040 gave vulcanizates with strengths comparable to a peroxide-Nordel 1040 compound (Table 2), whereas a blend with 10 phr EDBC resulted in poor strength. The relatively low efficiency of EDBC in effecting curing of EPDM may be attributed to competing homopolymerization of EDBC as indicated by electron microscopic analysis which shows the presence of aromatic rich dispersed spheres upon staining with $RuO_4$.

It should be noted that the proposed crosslinks in Nordel 1040-EDBC vulcanizates contain three different kinds of benzylic carbon-carbon bonds as shown below:

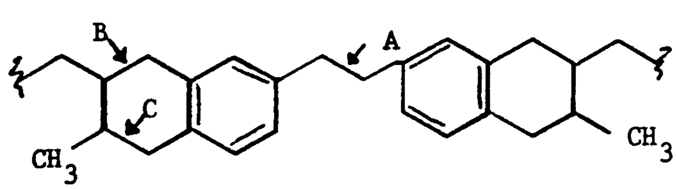

Benzylic carbon-carbon bonds are of 16.7 kJ/mol stronger than allylic carbon-carbon bonds (Table 3). Bond types B and C are formed as the result of the Diels-Alder curing chemistry; however, these do not represent weak links since both B and C would have to be cleaved in order to break the crosslink. Bond A is a potentially weak link, but it is part of the curing agent EDBC and not inherent to the curing chemistry. Replacement of the ethylene bridge in EDBC with phenyl or xylyl linkage would eliminate the potential weak links introduced by EDBC.

TABLE 2

| Tensile Properties ( a) of EDBC-Nordel 1040 Vulcanizates | | | |
|---|---|---|---|
| Blend Composition | 200% Modulus (MPA) | Tensile Strength (MPa) | % Elongation at break |
| 100 phr Nordel 1040<br>20 phr EDBC | 0.93 ± 0.07 | 7.19 ± 1.85 | 835 ± 105 |
| 100 phr Nordel 1040<br>30 phr EDBC | 1.05 ± 0.04 | 5.10 ± 2.17 | 562 ± 115 |
| 100 phr Nordel 1040 (b)<br>125 phr Carbon<br>50 phr Oil<br>5 phr ZnO<br>8 phr Di cup 40 °C | 1.72 | 6.38 | 560 |

(a) Averages of three mini specimens measured at a crosshead speed of 2.54 cm/min.
(b) Peroxide-cured compound. Data from "Peroxide Curing of Nordel", DuPont publication ND-310.2.

TABLE 3

| Carbon-Carbon Bond Dissociation Energy | |
|---|---|
| C-C Bond | Dissociation Energy (kJ/mol) ( a) |
| Me-$CH_3$ | 368 |
| Me-$C_2H_5$ | 356 |
| Me-iPr | 352 |
| Me-tBu | 343 |
| Me-Ph | 419 |
| Me-Bz | 301 |
| Me-allyl | 285 |

(a) From CRC Handbook of Chemistry and Physics, 61st Edition; H.J. Harwood, JTEVA, 11, 289 (1983).

## Claims

**Claims for the following Contracting States : BE, SE**

**1.** A crosslinkable polymeric composition, which can be cured by treating at a temperature above 200 °C, comprising an elastomeric polymer having olefinic unsaturation and a benzocyclobutene derivative of the general formula I

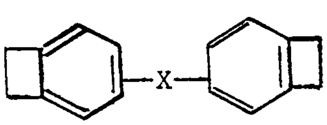

(I)

where X is selected from the group consisting of
$-CH=CH-$

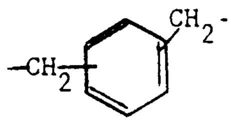

and {R}
where R represents an alkylene group having in the range of from 1 to 10 carbon atoms in an amount of more than 1 part by weight per 100 parts by weight of said elastomeric polymer.

**2.** A composition as claimed in claim 1 wherein said elastomeric polymer is an ethylene/$C_3$ to $C_8$ alpha-monoolefin/diene terpolymer, a butyl rubber, a polyisobutylene, a polybutadiene, a polyisoprene, a styrene-butadiene rubber, a nitrile rubber, a neoprene rubber or a styrene-butadiene block copolymer.

**3.** A composition as claimed in claim 2 wherein said elastomeric polymer is an ethylene/propylene/diene terpolymer.

**4.** A composition as claimed in claim 3 in which the diene is non-conjugated.

**5.** A composition as claimed in any one of claims 2 to 4 in which the diene is 1,4-hexadiene.

**6.** A composition as claimed in claim 2 which comprises a terpolymer comprising in the range of from 30 to 85 mol per cent ethylene, between 15 and 70 mol per cent of a $C_3$ to $C_8$ alpha-monoolefin or mixture thereof and between 1 and 20 mol per cent of a non-conjugated diene or mixture thereof.

**7.** A composition as claimed in claim 6 which comprises a terpolymer comprising in the range of from 40 to 70 mol per cent ethylene, in the range of from 20 to 58 mol per cent $C_3$ to $C_8$ monoolefin or mixture thereof and in the range of from 2 to 10 mol per cent of a non-conjugated diene or mixture thereof.

**8.** A composition as claimed in any one of the preceding claims wherein said benzocyclobutene derivative is
4,4'-ethylenedibenzocyclobutene,
4,4'-(p-xylylene)dibenzocyclobutene,
4,4'-(o-xylylene)dibenzocyclobutene,
4,4'-(m-xylylene)dibenzocyclobutene,
3,3'-(p-xylylene)dibenzocyclobutene,
3,3'-(o-xylylene)dibenzocyclobutene,
3,3'-(m-xylylene)dibenzocyclobutene,
4,3'-(p-xylylene)dibenzocyclobutene,
4,3'-(o-xylylene)dibenzocyclobutene,
4,3,-(m-xylylene)dibenzocyclobutene,
4,4'-methylenedibenzocyclobutene,
3,3'-methylenedibenzocyclobutene or
4,3'-methylenedibenzocyclobutene.

**9.** A composition as claimed in claim 8 wherein said benzocyclobutene derivative is 4,4'-ethylenedibenzocyclobutene.

**10.** A composition as claimed in any one of the preceding claims wherein the benzocyclobutene derivative of the general formula I is present in said composition in an amount in the range of from 1 to 30 parts by weight per 100 parts by weight of said elastomeric polymer.

**11.** A composition as claimed in any one of the preceding claims wherein the amount of benzocyclobutene derivative is between 5 and 20 parts by weight per 100 parts by weight of said elastomeric polymer.

**12.** A cured composition having high temperature elastomeric properties obtained by heating a polymeric composition as claimed in any one of the preceding claims to a temperature above 200 °C.

**13.** A cured composition as claimed in claim 12 obtained by heating the polymer composition to a temperature in the range of from 200 °C to 300 °C for at least 5 min.

**14.** A process for the preparation of a crosslinkable polymeric composition as claimed in any one of claims 1 to 10 which process comprises combining an elastomeric polymer having olefinic unsaturation and a benzocyclobutene derivative of the general formula I in claim 1.

**Claims for the following Contracting States : AT, ES**

**1.** Process for the preparation of a crosslinkable polymeric composition, which can be cured by treating at a temperature above 200 °C, which process comprises mixing an elastomeric polymer having olefinic unsaturation and a benzocyclobutene derivative of the general formula I

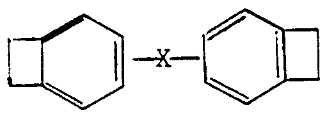

(I)

where X is selected from the group consisting of
-CH = CH-

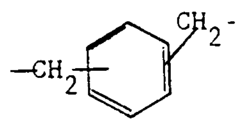

and $-(R)-$
where R represents an alkylene group having in the range of from 1 to 10 carbon atoms in an amount of more than 1 part by weight per 100 parts by weight of said elastomeric polymer.

**2.** A process as claimed in claim 1 wherein said elastomeric polymer is an ethylene/$C_3$ to $C_8$ alpha-monoolefin/diene terpolymer, a butyl rubber, a polyisobutylene, a polybutadiene, a polyisoprene, a styrene-butadiene rubber, a nitrile rubber, a neoprene rubber or a styrene-butadiene block copolymer.

**3.** A process as claimed in claim 2 wherein said elastomeric polymer is an ethylene/propylene/diene terpolymer.

**4.** A process as claimed in claim 3 in which the diene is non-conjugated.

**5.** A process as claimed in any one of claims 2 to 4 in which the diene is 1,4-hexadiene.

**6.** A process as claimed in claim 2, in which an elastomeric terpolymer is used comprising in the range of from 30 to 85 mol per cent ethylene, between 15 and 70 mol per cent of a $C_3$ to $C_8$ alpha-monoolefin or mixture thereof and between 1 and 20 mol per cent of a non-conjugated diene or mixture thereof.

**7.** A process as claimed in claim 6 in which an elastomeric terpolymer is used which comprises in the range of from 40 to 70 mol per cent ethylene, in the range of from 20 to 58 mol per cent $C_3$ to $C_8$ monoolefin or mixture thereof and in the range of from 2 to 10 mol per cent of a non-conjugated diene or mixture thereof.

**8.** A process as claimed in any one of the preceding claims wherein said benzocyclobutene derivative is
4,4'-ethylenedibenzocyclobutene,
4,4'-(p-xylylene)dibenzocyclobutene,

4,4'-(o-xylylene)dibenzocyclobutene,
4,4'-(m-xylylene)dibenzocyclobutene,
3,3'-(p-xylylene)dibenzocyclobutene,
3,3'-(o-xylylene)dibenzocyclobutene,
3,3'-(m-xylylene)dibenzocyclobutene,
4,3'-(p-xylylene)dibenzocyclobutene,
4,3'-(o-xylylene)dibenzocyclobutene,
4,3'-(m-xylylene)dibenzocyclobutene,
4,4'-methylenedibenzocyclobutene,
3,3'-methylenedibenzocyclobutene or
4,3'-methylenedibenzocyclobutene.

**9.** A process as claimed in claim 8 wherein said benzocyclobutene derivative is 4,4'-ethylenedibenzocyclobutene.

**10.** A process as claimed in any one of the preceding claims wherein the benzocyclobutene derivative of the general formula I is present in said composition in an amount in the range of from 1 to 30 parts by weight per 100 parts by weight of said elastomeric polymer.

**11.** A process as claimed in any one of the preceding claims wherein the amount of benzocyclobutene derivative is between 5 and 20 parts by weight per 100 parts by weight of said elastomeric polymer.

**12.** A process for the preparation of a cured composition having high temperature elastomeric properties, which process comprises heating a polymeric composition obtained by a process as claimed in any one of the preceding claims to a temperature above 200 °C.

**13.** A process as claimed in claim 12 obtained by heating the polymer composition to a temperature in the range of from 200 °C to 300 °C for at least 5 min.

## Revendications

**Revendications pour les Etats contractants suivants : BE, SE**

**1.** Une composition polymère réticulable, qui peut être durcie par traitement à une température au-dessus de 200 °C, comprenant un polymère élastomère ayant une insaturation oléfinique et un dérivé de cyclobutène de la formule générale I

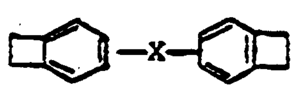

(I)

où X est choisi dans le groupe constitué par
-CH = CH-

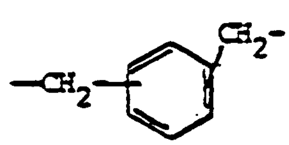

et {R}
où R représente un groupe alcoylène ayant de 1 à 10 atomes de carbone, à raison d'une quantité de plus de 1 partie en poids pour 100 parties en poids du polymère élastomère.

**2.** Une composition selon la revendication 1, dans laquelle le polymère élastomère est un terpolymère éthylène/alpha-monooléfine de $C_3$ à $C_8$/diène, un caoutchouc butyle, un polyisobutylène, un polybutadiène, un polyisoprène, un caoutchouc styrène-butadiène, un caoutchouc nitrile, un caoutchouc de néoprène ou un copolymère séquencé styrène-butadiène.

3. Une composition selon la revendication 2, dans laquelle le polymère élastomère est un terpolymère éthylène/propylène/diène.

4. Une composition selon la revendication 3, dans laquelle le diène est non-conjugué.

5. Une composition selon l'une quelconque des revendications 2 à 4, dans laquelle le diène est du 1,4-hexadiène.

6. Une composition selon la revendication 4 ou 5, qui comprend de 30 à 85 moles pour cent d'éthylène, entre 15 et 70 moles pour cent d'une alpha-monooléfine de $C_3$ à $C_8$ ou d'un mélange de telles oléfines et entre 1 et 20 moles pour cent d'un diène non-conjugué ou d'un mélange de tels diènes.

7. Une composition selon la revendication 6, qui comprend de 40 à 70 moles pour cent d'éthylène, de 20 à 58 moles pour cent d'une alpha-monooléfine de $C_3$ à $C_8$ ou d'un mélange de telles oléfines et de 2 à 10 moles pour cent d'un diène non-conjugué ou d'un mélange de tels diènes.

8. Une composition selon l'une quelconque des revendications précédentes, dans laquelle le dérivé de benzocyclobutène est
du 4,4'-éthylènedibenzocyclobutène,
du 4,4'(p-xylylène)dibenzocyclobutène,
du 4,4'-(o-xylylène)dibenzocyclobutène,
du 4,4'-(m-xylylène)dibenzocyclobutène,
du 3,3'-(p-xylylène)dibenzocyclobutène,
du 3,3'-(o-xylylène)dibenzocyclobutène,
du 3,3'-(m-xylylène)dibenzocyclobutène,
du 4,3'-(p-xylylène)dibenzocyclobutène,
du 4,3'-(o-xylylène)dibenzocyclobutène,
du 4,3'-(m-xylylène)dibenzocyclobutène,
du 4,4'-méthylènedibenzocyclobutène,
du 3,3'-méthylènedibenzocyclobutène ou
du 4,3'-méthylènedibenzocyclobutène.

9. Une composition selon la revendication 8, dans laquelle le dérivé de benzocyclobutène est du 4,4'-éthylènedibenzocyclobutène.

10. Une composition selon l'une quelconque des revendications précédentes, dans laquelle le dérivé de benzocyclobutène de la formule générale I est présent dans la composition à raison d'une quantité comprise entre 1 et 30 parties en poids pour 100 parties en poids du polymère élastomère.

11. Une composition selon l'une quelconque des revendications précédentes, dans laquelle la quantité de dérivé de benzocyclobutène est comprise entre 5 et 20 parties en poids pour 100 parties en poids du polymère élastomère.

12. Une composition durcie ayant des propriétés élastomères à température élevée obtenue en chauffant une composition polymère selon l'une quelconque des revendications précédentes à une température au-dessus de 200 ° C.

13. Une composition durcie selon la revendication 12 obtenue en chauffant la composition polymère à une température comprise entre 200 ° C et 300 ° C pendant au moins 5 minutes.

14. Un procédé pour la préparation d'une composition polymère réticulable selon l'une quelconque des revendications 1 à 10, qui comprend la combinaison d'un polymère élastomère ayant une insaturation oléfinique et d'un dérivé de benzocyclobutène de la formule générale I indiquée dans la revendication 1.

**Revendications pour les Etats contractants suivants : AT, ES**

**1.** Procédé pour la préparation d'une composition polymère réticulable, qui peut être durcie par traitement à une température au-dessus de 200 °C, qui comprend l'opération de mélange d'un polymère élastomère ayant une insaturation oléfinique et d'un dérivé de benzocyclobutène de la formule générale I

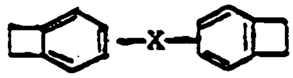

(I)

où X est choisi dans le groupe constitué par
-CH = CH-

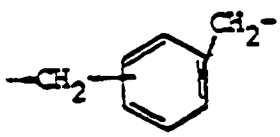

et $-(R)-$
où R représente un groupe alcoylène ayant de 1 à 10 atomes de carbone, à raison d'une quantité de plus de 1 partie en poids pour 100 parties en poids du polymère élastomère.

**2.** Un procédé selon la revendication 1, dans lequel le polymère élastomère est un terpolymère éthylène/alpha-monooléfine de $C_3$ à $C_8$/diène, un caoutchouc butyle, un polyisobutylène, un polybutadiène, un polyisoprène, un caoutchouc styrène-butadiène, un caoutchouc nitrile, un caoutchouc de néoprène ou un copolymère séquencé styrène-butadiène.

**3.** Un procédé selon la revendication 2, dans lequel le polymère élastomère est un terpolymère éthylène/propylène/diène.

**4.** Un procédé selon la revendication 3, dans lequel le diène est non-conjugué.

**5.** Un procédé selon l'une quelconque des revendications 2 à 4, dans lequel le diène est du 1,4-hexadiène.

**6.** Un procédé selon la revendication 2, dans lequel on utilise un copolymère élastomère comprenant de 30 à 80 moles pour cent d'éthylène, de 15 à 70 moles pour cent d'une alpha-monooléfine de $C_3$ à $C_8$ ou d'un mélange de telles oléfines et de 1 à 20 moles pour cent d'un diène non-conjugué ou d'un mélange de tels diènes.

**7.** Un procédé selon la revendication 6, dans lequel on utilise un terpolymère élastomère qui comprend de 40 à 70 moles pour cent d'éthylène, de 20 à 58 moles pour cent d'une monooléfine de $C_3$ à $C_8$ ou d'un mélange de telles oléfines et de 2 à 10 moles pour cent d'un diène non-conjugué ou d'un mélange de tels diènes.

**8.** Un procédé selon l'une quelconque des revendications précédentes, dans lequel le dérivé de benzocyclobutène est
du 4,4'-éthylènedibenzocyclobutène,
du 4,4'-(p-xylylène)dibenzocyclobutène,
du 4,4'-(o-xylylène)dibenzocyclobutène,
du 4,4'-(m-xylylène)dibenzocyclobutène,
du 3,3'-(p-xylylène)dibenzocyclobutène,
du 3,3'-(o-xylylène)dibenzocyclobutène,
du 3,3'-(m-xylylène)dibenzocyclobutène,
du 4,3'-(p-xylylène)dibenzocyclobutène,
du 4,3'-(o-xylylène)dibenzocyclobutène,
du 4,3'-(m-xylylène)dibenzocyclobutène,

du 4,4'-méthylènedibenzocyclobutène,
du 3,3'-méthylènedibenzocyclobutène ou
du 4,3'-méthylènedibenzocyclobutène.

**9.** Un procédé selon la revendication 8, dans lequel le dérivé de benzocyclobutène est du 4,4'-éthylènedibenzocyclobutène.

**10.** Un procédé selon l'une quelconque des revendications précédentes, dans lequel le dérivé de benzocyclobutène de la formule générale I est présent dans la composition à raison d'une quantité comprise entre 1 et 30 parties en poids pour 100 parties en poids du polymère élastomère.

**11.** Un procédé selon l'une quelconque des revendications précédentes, dans lequel la quantité de dérivé de benzocyclobutène est comprise entre 5 et 20 parties en poids pour 100 parties en poids du polymère élastomère.

**12.** Un procédé pour la préparation d'une composition durcie ayant des propriétés élastomères à température élevée, qui comprend le chauffage d'une composition polymère obtenue par un procédé selon l'une quelconque des revendications précédentes à une température au-dessus de 200 °C.

**13.** Un procédé selon la revendication 12, dans lequel on chauffe la composition polymère à une température comprise entre 200 °C et 300 °C pendant au moins 5 minutes.

**Patentansprüche**

**Patentansprüche für folgende Vertragsstaaten : BE, SE**

**1.** Vernetzbare Polymerzusammensetzung, die durch Behandlung bei einer Temperatur von über 200 °C gehärtet werden kann, umfassend ein elastomeres Polymer mit olefinischer Unsättigung und ein Benzocyclobutenderivat der allgemeinen Formel I

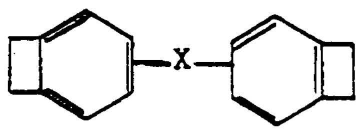

(I),

worin X aus der aus
-CH = CH- ,

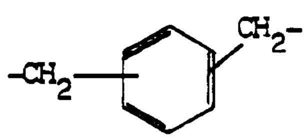

und $-(R)-$
bestehenden Gruppe ausgewählt ist, worin R eine Alkylengruppe mit einem Bereich von 1 bis 10 Kohlenstoffatomen darstellt, in einer Menge von mehr als 1 Gewichtsteil je 100 Gewichtsteile des genannten elastomeren Polymers.

**2.** Zusammensetzung nach Anspruch 1, worin das elastomere Polymer ein Ethylen/$C_3$-bis $C_8$-alpha-Monoolefin/Dien-Terpolymer, ein Butylkautschuk, ein Polyisobutylen, ein Polybutadien, ein Polyisopren, ein Styrol-Butadien-Kautschuk, ein Nitrilkautschuk, ein Neoprenkautschuk oder ein Styrol-Butadien-Blockcopolymerist.

**3.** Zusammensetzung nach Anspruch 2, worin das elastomere Polymer ein Ethylen/Propylen/Dien-Terpolymer ist.

**4.** Zusammensetzung nach Anspruch 3, worin das Dien nicht-konjugiert ist.

**5.** Zusammensetzung nach einem der Ansprüche 2 bis 4, worin das Dien 1,4-Hexadien ist.

**6.** Zusammensetzung nach Anspruch 4 oder 5, welche von 30 bis 85 Mol-% Ethylen, zwischen 15 und 70 Mol-% eines $C_3$- bis $C_8$-alpha-Monoolefins oder eines Gemisches hievon und von 1 bis 20 Mol-% eines nicht-konjugierten Diens oder eines Gemisches hievon umfaßt.

**7.** Zusammensetzung nach Anspruch 6, welche von 40 bis 70 Mol-% Ethylen, von 20 bis 58 Mol-% eines $C_3$- bis $C_8$-Monoolefins oder eines Gemisches hievon und von 2 bis 10 Mol-% eines nicht-konjugierten Diens oder eines Gemisches hievon umfaßt.

**8.** Zusammensetzung nach einem der vorstehenden Ansprüche, worin das Benzocyclobutenderivat 4,4'-Ethylendibenzocyclobuten, 4,4'-(p-Xylylen)dibenzocyclobuten, 4,4'-(o-Xylylen)dibenzocyclobuten, 4,4'-(m-Xylylen)dibenzocylobuten, 3,3'-(p-Xylylen)dibenzocyclobuten, 3,3'-(o-Xylylen)dibenzocyclobuten, 3,3'-(m-Xylylen)dibenzocylclobuten, 4,3'-(p-Xylylen)dibenzocyclobuten, 4,3'-(o-Xylylen)-dibenzocyclobuten, 4,3'-(m-Xylylen)dibenzocyclobuten, 4,4'-Methylendibenzocyclobuten, 3,3'-Methylendibenzocyclobuten oder 4,3'-Methylendibenzocyclobuten ist.

**9.** Zusammensetzung nach Anspruch 8, worin das Benzocyclobutenderivat 4,4'-Ethylendibenzocyclobuten ist.

**10.** Zusammensetzung nach einem der vorstehenden Ansprüche, worin das Benzocyclobutenderivat der allgemeinen Formel I in der Zusammensetzung in einer Menge im Bereich von 1 bis 30 Gewichtsteilen je 100 Gewichtsteilen des elastomeren Polymers vorliegt.

**11.** Zusammensetzung nach einem der vorstehenden Ansprüche, worin die Menge des Benzocyclobutenderivats 5 bis 20 Gewichtsteile je 100 Gewichtsteile des elastomeren Polymers beträgt.

**12.** Gehärtete Zusammensetzung mit Hochtemperatur-Elastomereigenschaften, erhalten durch Erwärmen einer polymeren Zusammensetzung nach einem der vorstehenden Ansprüche auf eine Temperatur von über 200 °C.

**13.** Gehärtete Zusammensetzung nach Anspruch 12, erhalten durch Erwärmen der Polymerzusammensetzung auf eine Temperatur im Bereich von 200 °C bis 300 °C während wenigstens 5 Minuten.

**14.** Verfahren zur Herstellung einer vernetzbaren Polymerzusammensetzung nach einem der Ansprüche 1 bis 11, welches Verfahren ein Vereinigen eines elastomeren Polymers mit einer olefinischen Unsättigung mit einem Benzocyclobutenderivat der in Anspruch 1 engegebenen allgemeinen Formel I umfaßt.

**Patentansprüche für folgende Vertragsstaaten : AT, ES**

**1.** Verfahren zur Herstellung einer vernetzbaren Polymerzusammensetzung, die durch Behandeln bei einer Temperatur von über 200 °C gehärtet werden kann, welches Verfahren ein Vermischen eines elastomeren Polymers mit olefinischer Unsättigung mit einem Benzocyclobutenderivat der allgemeinen Formel I

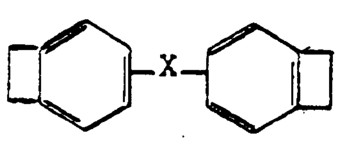

(I),

worin X aus der aus
-CH = CH-

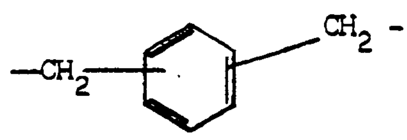

und $-(R)-$
bestehenden Gruppe ausgewählt ist, worin R eine Alkylengruppe mit einem Bereich von 1 bis 10 Kohlenstoffatomen darstellt, in einer Menge von mehr als 1 Gewichtsteil je 100 Gewichtsteile des genannten elastomeren Polymers, umfaßt.

**2.** Verfahren nach Anspruch 1, worin das elastomere Polymer ein Ethylen/$C_3$ bis $C_8$ alpha-Monoolefin/Dien-Terpolymer, ein Butylkautschuk, ein Polyisobutylen, ein Polybutadien, ein Polyisopren, ein Styrol-Butadien-Kautschuk, ein Nitrilkautshuk, ein Neoprenkautschuk oder ein Styrol-Butadien-Blockcopolymer ist.

**3.** Verfahren nach Anspruch 2, worin des elastomere Polymer ein Ethylen/Propylen/Dien-Terpolymer ist.

**4.** Verfahren nach Anspruch 3, worin das Dien nicht-konjugiert ist.

**5.** Verfahren nach einem der Ansprüche 2 bis 4, worin das Dien 1,4-Hexadien ist.

**6.** Verfahren nach Anspruch 2, worin ein elastomeres Terpolymer verwendet wird, welches von 30 bis 85 Mol-% Ethylen, zwischen 15 und 70 Mol-% eines $C_3$- bis $C_8$-alpha-Monoolefins oder eines Gemisches hievon und von 1 bis 20 Mol-% eines nicht-konjugierten Diens oder eines Gemisches hievon umfaßt.

**7.** Verfahren nach Anspruch 6, worin ein elastomeres Terpolymer verwendet wird, welches von 40 bis 70 Mol-% Ethylen, von 20 bis 58 Mol-% eines $C_3$- bis $C_8$-Monoolefins oder eines Gemisches hievon und von 2 bis 10 Mol-% eines nicht-konjugierten Diens oder eines Gemisches hievon umfaßt.

**8.** Verfahren nach einem der vorstehenden Ansprüche, worin das Benzocyclobutenderivat 4,4'-Ethylendibenzocyclobuten, 4,4'-(p-Xylylen)dibenzocyclobuten, 4,4'-(o-Xylylen)dibenzocyclobuten, 4,4'-(m-Xylylen)dibenzocyclobuten, 3,3'-(p-Xylylen)dibenzocyclobuten, 3,3'-(o-Xylylen)dibenzocyclobuten, 3,3'-(m-Xylylen)dibenzocyclobuten, 4,3'-(p-Xylylen)dibenzocyclobuten, 4,3'-(o-Xylylen)dibenzocyclobuten, 4,3'-(m-Xylylen)dibenzocyclobuten, 4,4' -Methylendibenzocyclobuten, 3,3'-Methylendibenzocyclobuten oder 4,3'-Methylendibenzocyclobuten ist.

**9.** Verfahren nach Anspruch 8, worin das Benzocyclobutenderivat 4,4'-Ethylendibenzocyclobuten ist.

**10.** Verfahren nach einem der vorstehenden Ansprüche, worin das Benzocyclobutenderivat der allgemeinen Formel I in der Zusammensetzung in einer Menge im Bereich von 1 bis 30 Gewichtsteilen je 100 Gewichtstellen des elastomeren Polymers vorliegt.

**11.** Verfahren nach einem der vorstehenden Ansprüche, worin die Menge des Benzocyclobutenderivats 5 bis 20 Gewichtsteile je 100 Gewichtsteile des elastomeren Polymers beträgt.

**12.** Verfahren zur Herstellung einer gehärteten Zusammensetzung mit Hochtemperatur-Elastomereigenschaften, welches Verfahren ein Erwärmen einer polymeren Zusammensetzung, erhalten nach einem Verfahren gemäß einem der vorstehenden Ansprüche, auf eine Temperatur von über 200 ° C umfaßt.

**13.** Verfahren nach Anspruch 12, welches ein Erwärmen der Polymerzammensetzung auf eine Temperautr im Bereich von 200 ° C bis 300 ° C während wenigstens 5 Minuten umfaßt.